# EUROPEAN PATENT SPECIFICATION

(11) **EP 1 659 701 B1**
(45) Date of publication and mention of the grant of the patent: **22.02.2012**
(21) Application number: 05110681.3
(22) Date of filing: 14.11.2005
(51) Int. Cl.: H04B 1/38, H04M 1/02, H01Q 1/24

(54) **Portable radio device**
Tragbares Funkgerät
Dispositif radio portable

(30) Priority: 19.11.2004 JP 2004335480
(43) Date of publication of application: 24.05.2006
(73) Proprietor: NEC Corporation, Minato-ku Tokyo 108-8001 (JP)
(72) Inventor: Ide, Yoshiyuki, Tokyo (JP)
(74) Representative: Betten & Resch

(56) References cited:
- EP-A- 0 323 614
- WO-A-00/30267
- US-A- 5 170 173
- US-B1- 6 272 324
- US-B1- 6 342 859

## Description

### BACKGROUND OF THE INVENTION

### 1. Field of the Invention

The present invention relates to a portable radio device, and more particularly to grounding of a portable radio device having two cases.

### 2. Description of the Related Art

Many of recent compact portable radio devices, such as a potable telephone set, incorporate communication antennas in cases thereof. The case, which is provided for the portable radio device, for incorporating the antenna must be made of an insulating material such as a resin. In the case of a portable radio device including two cases, one of the cases for incorporating an antenna is made of a resin or the like, while the other case is normally made of a metallic material having high mechanical strength. In such a portable radio device having two cases, the case incorporating an antenna is grounded to the other case. This grounding is realized by a signal line in a flexible substrate connecting circuit boards of the cases to each other. The flexible substrate connects the circuit boards of the cases to each other, and the circuit board in the metal case is connected to the metal case.

In the grounding described above, when the portable radio device are opened by unfolding the two cases, a sum of a length of the flexible substrate and lengths of the two cases must be equal to a predetermined length which attains good antenna characteristics. Similarly, when the metal case and the circuit board incorporated therein are connected to each other, a sum of a length of the circuit board in the case incorporating the antenna, the length of the flexible substrate, and the length of the metal case must be equal to a predetermined length which attains good antenna characteristics. Under these conditions, if the flexible substrate is long, the length of the circuit board must be reduced. However, the number of devices or modules that can be mounted on a short, i . e . , small-area, circuit board is limited. On the other hand, normally, the flexible substrate has a looped portion in a hinge which foldably connects the two circuit boards. When the flexible substrate is made short, a curvature radius of the looped portion of the flexible substrate is reduced, which generates large bending stress. As a result, the flexible substrate becomes easy to be broken. When the two cases are rotatably connected together, twisting stress is generated in the flexible substrate. When the two cases are slidably connected together, tensile stress is generated in the flexible substrate. When the flexile substrate is made short, those stresses are increased, making the flexible substrate easy to be broken.

JP 2003-347815 A discloses a portable radio device composed of one case which has a metal wire for adj usting an antenna length. JP 2002-330206 A discloses a portable telephone set composed of two cases foldably connected together by a hinge. The hinge has a frame grounding portion. However, these well-known technologies are not suited to frame grounding of the two cases connected together to be movable in various modes.

In US 6,272,324, an electrical connection for telephone with hinged cover is diclosed wherein an electrical connector establishes electrical connection between transceiver electronics disposed in a main body of the phone and remote electrical components contained in a movable cover. One or more fixed contacts operatively connected to the transceiver electronics are disposed on the main body of the phone. Movable contacts operatively connected to the remote electrical components are disposed on the cover. The movable contacts on the cover engage the fixed contacts on the main body when the cover is in the open and closed positions. Communitating contacts can be used to maintain a continuous connection as the cover travels between open and closed positions.

In US 6,342,859, an extendable ground arrangement for an antenna system in a radio communication device is disclosed to be operating at within one or more frequency bands. The extendable arrangement forms part of the antenna system and includes a movable and non-conductive support means and conductive means supported by said support means. The support means may be a foldable or slidable cover portion of a hand-portable telephone.

In WO 00/30267, a cellular phone is disclosed which has a flip connected to the main body of the cellular phone in a pivotable manner. The flip has an inner face and an outer face when the flip is closed with recpect to the main body. The main body has a first antenna, and the flip has a second antenna. The center of mass of the second antenna is located further from the main body than the center of the flip when the flip is opened. A coupling antenna is provided in the inner face of the flip, and a radio signal is transferred from the second antenna to the coupling antenna by capacitive coupling.

### SUMMARY OF THE INVENTION

It is therefore an object of the present invention to realize secure frame grounding in a portable radio device composed of two cases movably connected together.

The present invention provides a portable radio device including two cases. A first case has at least one of a conductive member and a first substrate. A second case incorporates a second substrate to mount a radio circuit thereon, and an antenna element. The antenna current generated by the antenna element is grounded to the first case. The first case and the second case are movably connected to each other, and the second substrate is capacitively coupled to at least one of the conductive member and the first substrate.

The portable ratio device enables secure and easy grounding between the two cases. In the portable radio device, there is no need to use a flexible substrate for grounding. Thus, as it is not necessary to shorten the circuit board, no restrictions are imposed on mounting of various devices or modules on the substrate.

### BRIEF DESCRIPTION OF THE DRAWINGS

The above and other objects, features and advantages of the present invention will become apparent from the following detailed description when taken with the accompanying drawings in which:
FIGS. 1A and 1B are side and plan views showing an example of a portable telephone set having two cases that can be folded together;
FIGS. 2A and 2B are side views showing an example of a portable telephone set having two cases that can be rotated;
FIG. 2C is a plan view of the portable telephone set shown in FIGS. 2A and 2B;
FIGS. 3A and 3B are side views showing another example of a portable telephone set having two cases that can be rotated;
FIGS. 4A and 4B are side views showing an example of a portable telephone set having two cases that can be slid;
FIG. 4C is a plan view of the portable telephone set shown in FIGS. 4A and 4B;
FIGS. 5A and 5B are side views showing another example of a portable telephone set having two cases that can be slid;
FIGS. 6A and 6B are side and plan views showing another example of a portable telephone set having two cases that can be folded together;
FIGS. 7A and 7B are side and plan views showing yet another example of a portable telephone set having two cases that can be folded together; and
FIGS. 8A and 8B respectively show antenna characteristics of a portable telephone set according to the present invention and of a conventional portable telephone set.

### DETAILED DESCRIPTION OF THE PREFERRED EMBODIMENTS

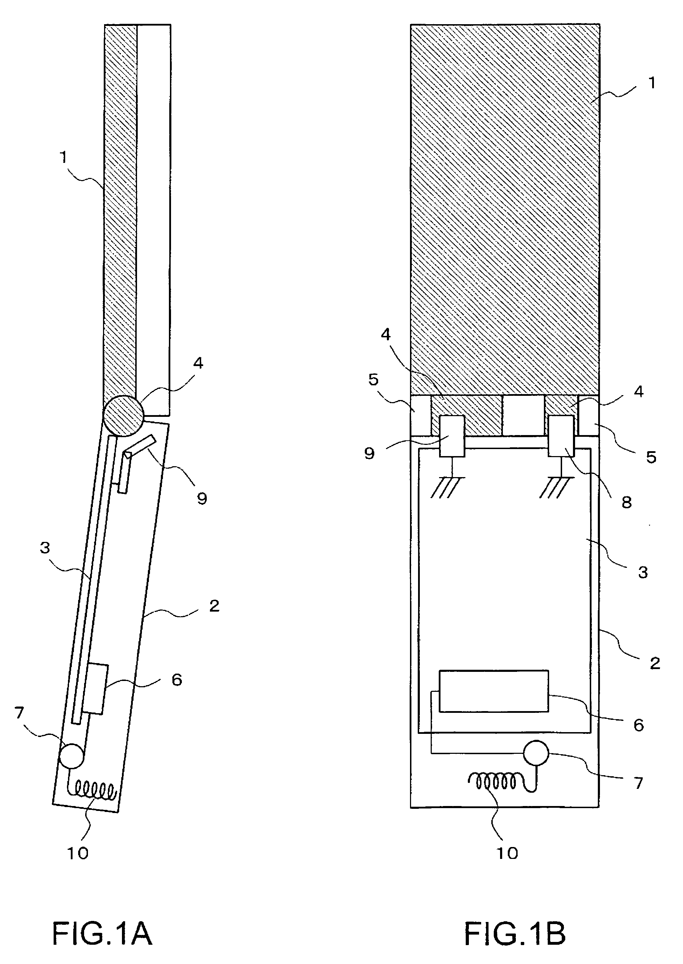

The preferred embodiments of the present invention will be described below. FIGS. 1A and 1B show a portable telephone set as an example of a portable radio device. In the portable telephone set, an upper case 1 and a lower case 2 are foldably connected together via hinges 4 and 5. FIGS. 1A and 1B are side and front views of the portable telephone set when the two cases 1 and 2 are spread out, i.e., unfolded. In each of FIGS. 1A and 1B, a shaded portion indicates an area made of a conductive material (the same applies to throughout the drawings). The upper case 1 has a conductivematerial. The lower case 2 receives a substrate 3 for mounting a radio circuit 6, and an antenna element 10. The lower case 2 is made of an insulating material. The substrate 3 is connected through a power feeding point 7 to the antenna element 10. The hinge 4 is made of a conductive material, and installed in the upper case 1. The hinge 5 is made of an insulating material, and installed in the lower case 2. Metal terminals 8 and 9 are installed in an end of the substrate 3 near the hinge 4. The metal terminals 8 and 9 are connected to a ground terminal (GRD) of the substrate 3.

During a call of the potable telephone set, i.e., during a receiving or transmitting operation of the radio circuit 6, an antenna current flows from the antenna element 10 through the power feeding point 7 to the substrate 3. The antenna current passes through mainly a side end of the substrate 3 to reach the metal terminals 8 and 9 grounded to the substrate 3. As the metal terminals 8 and 9 are capacitively coupled to the conductive hinge 4, the antenna current flows through the hinge 4 to the upper case 1. As a result, during the operation of the portable telephone set, the antenna current generated by the antenna element 10 is grounded to the upper case 1. Even when the cases 1 and 2 are folded together, the metal terminals 8 and 9 can be capacitively coupled to the hinge 4.

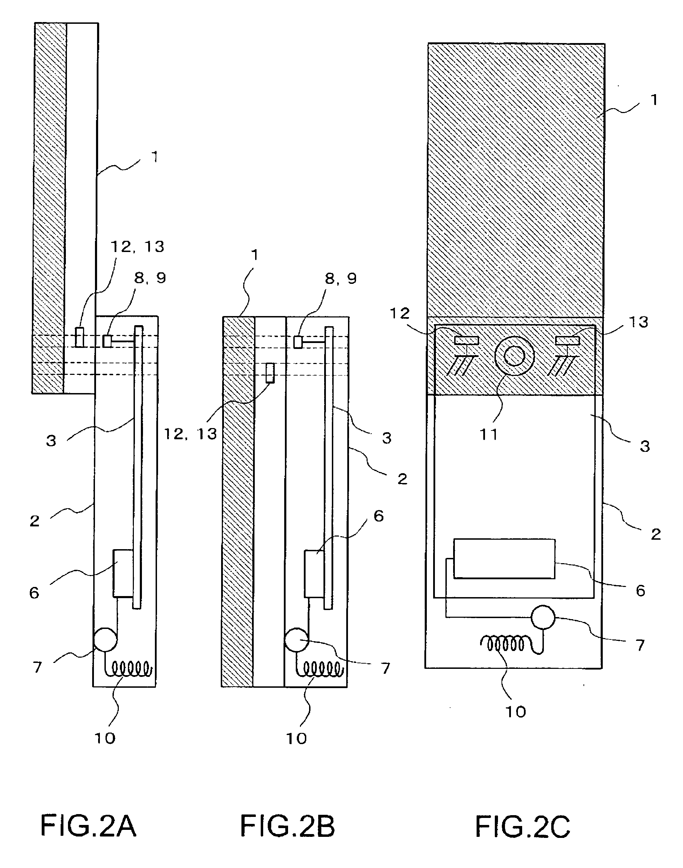

FIGS. 2A to 2C show another example of a portable telephone set. In this portable telephone set, an upper case 1 and a lower case 2 are rotatably connected together through a pivot 11. FIG. 2A is a side view of the portable telephone set when the two cases 1 and 2 are unfolded. FIG. 2B is a side view of the portable telephone set when the two cases 1 and 2 face each other to be closed. FIG. 2C is a plan view of the portable telephone set when the two cases are unfolded.

In the portable telephone set, as shown in FIG. 2B, the upper case 1 and the lower case 2 are arranged to face each other and to be stacked in a standby status. During a call, as shown in FIGS. 2A and 2C, the upper case 1 and the lower case 2 are rotated about the pivot 11 to be unfolded. The upper case 1 has a conductive material. The lower case 2 receives a substrate 3 for mounting a radio circuit 6 thereon, and an antenna element 10. The lower case 2 is made of an insulating material. The pivot 11 connects a backside of the upper case 1 to a front side of the lower case 2. Metal terminals 12 and 13 are disposed near the pivot 11 of the upper case 1. The metal terminals 12 and 13 are connected to a ground terminal (GND) of the upper case 1 or a substrate (not shown) in the upper case 1.

During a call, an antenna current generated by the antenna element 10 flows from the antenna element 10 through a power feeding point 7 to the substrate 3. The antenna current reaches metal terminals 8 and 9 formed in an end of the substrate 3. The metal terminals 8 and 9 are connected to a ground terminal (GRD) of the substrate 3. When the cases 1 and 2 are unfolded, the metal terminals 12 and 13 approach the metal terminals 8 and 9 installed in the substrate 3 to be capacitively coupled to the metal terminals 8 and 9. As a result, the antenna current flows to the upper case 1 or the substrate in the upper case 1. Thus, as the antenna current is grounded to the upper case 1 during a call, antenna characteristics are improved in a band including a frequency of the antenna current, to thereby provide better communication quality.

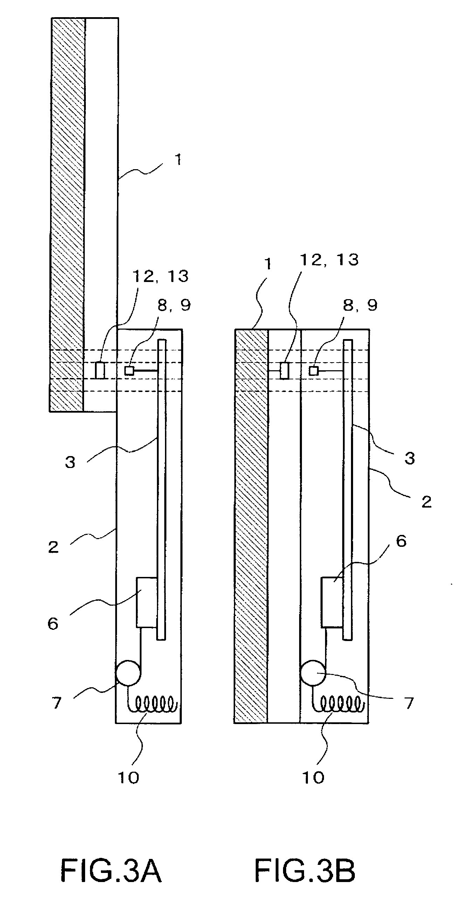

FIGS. 3A and 3B show yet another example of a portable telephone set. Also in this portable telephone set, an upper case 1 and a lower case 2 are rotatably connected together through a pivot 11. In the example of the portable telephone set shown in FIGS. 2A to 2C, the metal terminals 8 and 9 and the metal terminals 12 and 13 are capacitively coupled together only when the two cases 1 and 2 are unfolded. However, in the case of the portable telephone set illustrated in FIGS. 3A and 3B, metal terminals 8 and 9 and metal terminals 12 and 13 are capacitively coupled together even when the upper case 1 and the lower case 2 face each other to be closed. According to this example, the metal terminals 12 and 13 can be connected to a ground terminal (GND) of the upper case 1 or a substrate (not shown) in the case 1. The metal terminals 12 and 13 can capacitively couple a substrate 3 to the upper case 1, or the substrate 3 to the substrate (not shown) in the upper case 1.

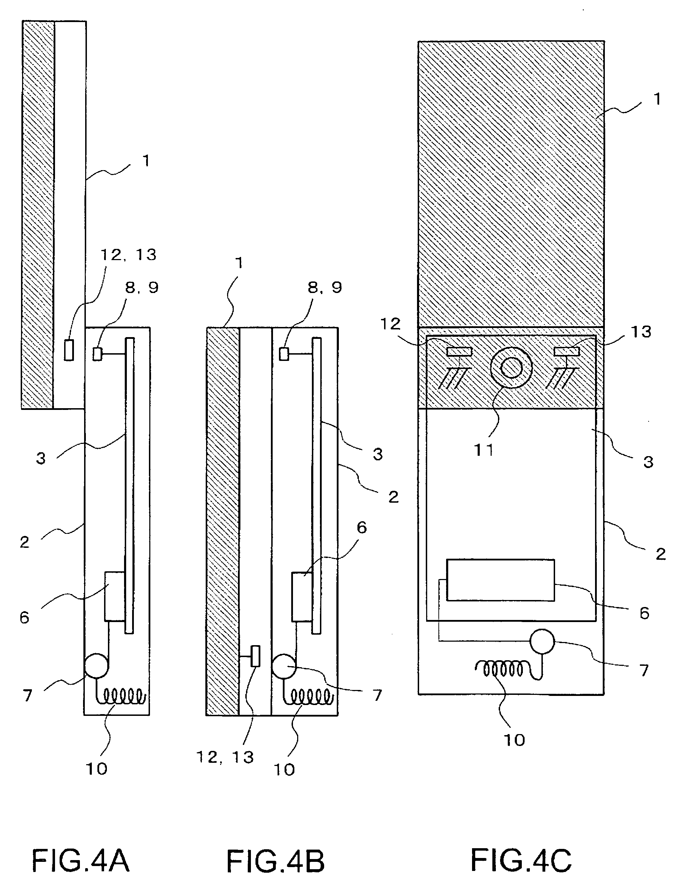

FIGS. 4A to 4C show yet another example of a portable telephone set. In this portable telephone set, an upper case 1 and a lower case 2 are slidably connected together. That is, the cases 1 and 2 are relatively moved in parallel to each other to be unfolded. FIG. 4A is a side view of the portable telephone set when the two cases 1 and 2 are moved in parallel to each other to be unfolded. FIG. 4B is a side view of the portable telephone set when the two cases 1 and 2 face each other to be closed. FIG. 4C is a plan view of the portable telephone set when the two cases 1 and 2 are unfolded.

The upper case 1 has a conductive material. The lower case 2 receives a substrate 3 equipped with a radio circuit 6, and an antenna element 10, and it is made of an insulating material. A backside of the upper case 1 and a front side of the lower case 2 are in contact with each other, and these cases relatively move in parallel to each other to be unfolded.

Metal terminals 12 and 13 are disposed near an end of the upper case 1. The metal terminals 12 and 13 are connected to a ground terminal (GND) of the upper case 1 or a substrate (not shown) in the upper case 1. The radio circuit is mounted on the substrate 3 in the lower case 2. The substrate 3 is connected through a power feeding point 7 to the antenna element 10. Metal terminals 8 and 9 are disposed near an end of the substrate 3. The metal terminals 8 and 9 are connected to a ground terminal (GND) of the substrate 3. As shown in FIG. 4A, the metal terminals 8 and 9 are capacitively coupled to the metal terminals 12 and 13 when the cases 1 and 2 are unfolded.

During a receiving or transmitting operation of the radio circuit 6, an antenna current generated by the antenna element 10 flows through the power feeding point 7 to the substrate 3. The antenna current further flows to the end of the substrate 3 to reach the metal terminals 8 and 9 grounded to the substrate 3. As shown in FIG. 4A, when the cases 1 and 2 are unfolded, the antenna current flows to the upper case 1 to be grounded to the same. As shown in FIG. 4B, when the cases 1 and 2 are closed, the metal terminals 8 and 9 are not capacitively coupled to the metal terminals 12 and 13.

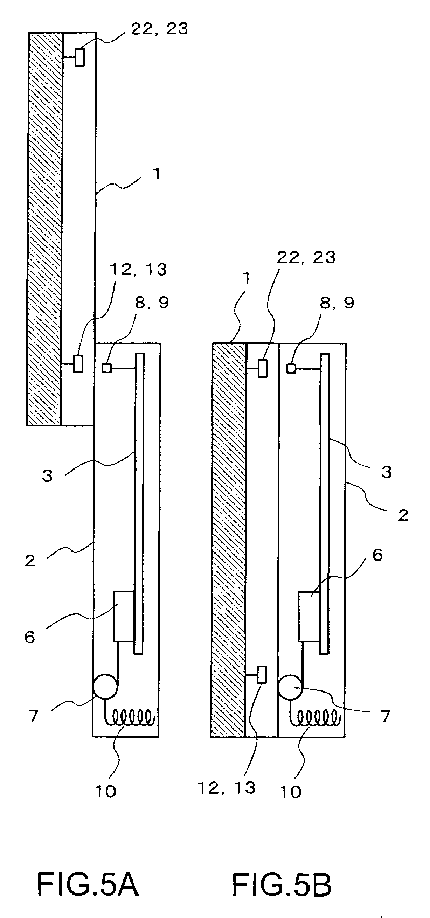

FIGS. 5A and 5B are side views showing another example of a portable telephone set in which an upper case 1 and a lower case 2 are slidably connected together. According to this example, the upper case 1 further has metal terminals 22 and 23. Even when the cases 1 and 2 are closed, metal terminals 8 and 9 are capacitively coupled to the metal terminals 22 and 23.

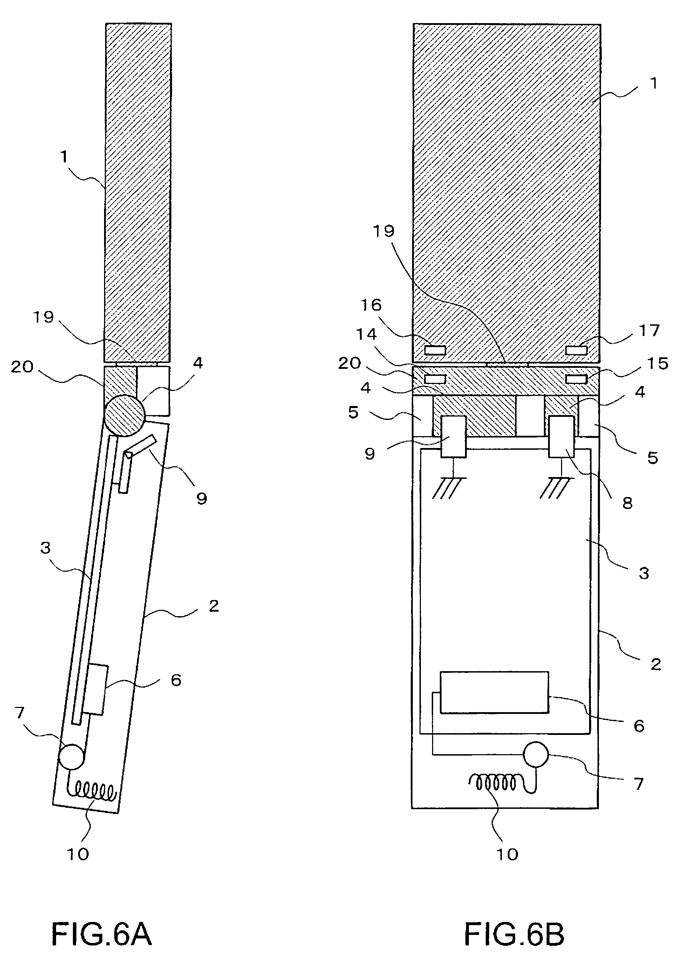

FIGS. 6A and 6B are respectively side and plan views each showing an example of a portable telephone which has a biaxial hinge. This portable telephone set includes upper and lower cases 1 and 2, and a middle case 20 disposed therebetween. The middle case 20 is foldably connected to the lower case 2 via hinges 4 and 5. The middle case 20 is further rotatably connected through a pivot 19 to the upper case 1. The upper case 1 can rotate about the pivot 19. The middle case 20 has metal terminals 14 and 15. The upper case 1 has metal terminals 16 and 17.

In the above-described portable telephone set, when the cases are unfolded, the metal terminals 8 and 9 are capacitively coupled to the hinge 4, and the metal terminals 14 and 15 are capacitively coupled to the metal terminals 16 and 17. Accordingly, an antenna current is grounded through the substrate 3 and the middle case 20 to the upper case 1. The substrate 3 and the upper case 1 or a substrate in the upper case 1 can be capacitively coupled together only when the cases are unfolded. In the portable telephone set shown in FIGS. 6A and 6B, even when the cases 1 and 2 are folded, the substrate 3 and the upper case 1 or the substrate therein can be capacitively coupled together.

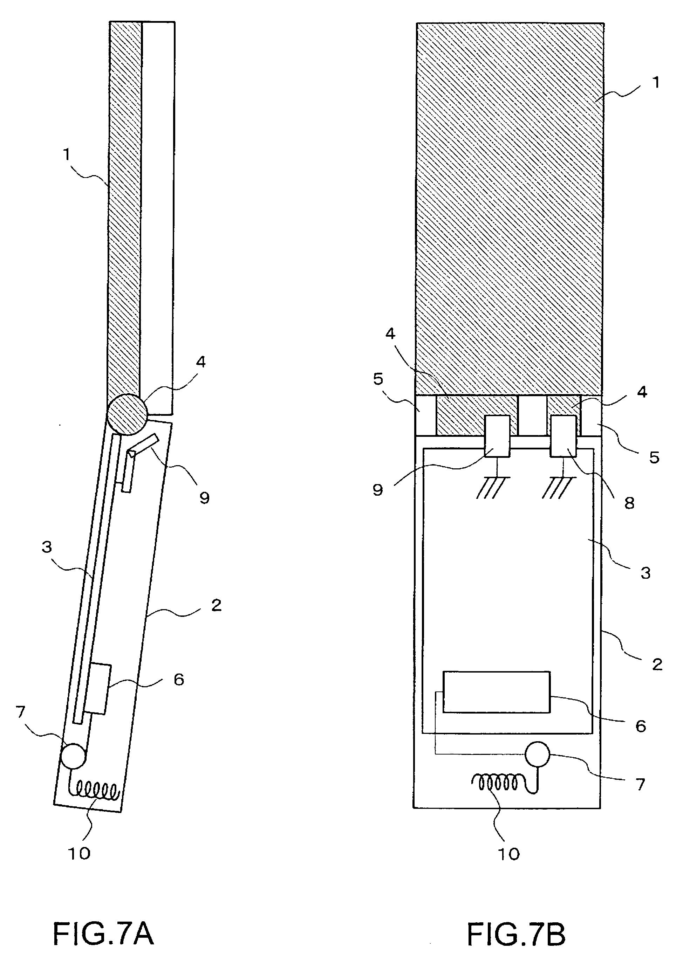

FIGS. 7A and 7B show yet another example of a portable telephone set. In this portable telephone set, a metal terminal 9 is disposed in a center of an end side of a substrate 3, while a metal terminal 8 is disposed in an end on the end side of the substrate 3. A high-frequency current, i.e., an antenna current, greatly flows to a side end of the substrate 3 because of a skin effect. Accordingly, as shown in FIGS. 1A to 6B, metal terminals to be capacitively coupled to one another are preferably disposed in both ends of the substrate. However, as shown in FIGS. 7A and 7B, one metal terminal can be disposed in one of side ends of the substrate.

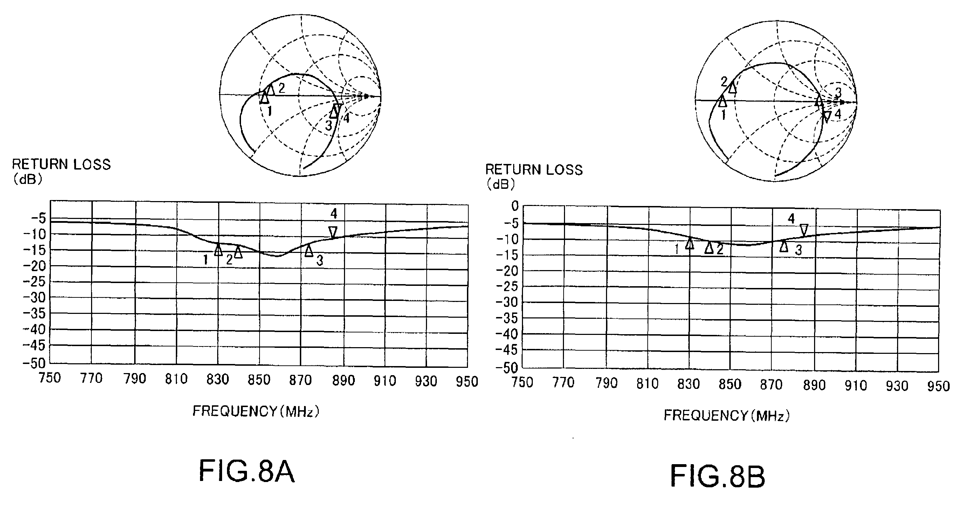

FIG. 8A shows antenna characteristics of the radio circuit 6 of the portable telephone set of the above embodiments. FIG. 8B shows antenna characteristics of a radio circuit 6 of a conventional portable telephone set. In FIGS. 8A and 8B, markers 1 to 4 respectively indicate 830 MHz, 840 MHz, 875 MHz, and 885 MHz. In FIG. 8A, a return loss is reduced at each frequency. When both smith charts are compared with each other, a bandwidth indicating desired antenna characteristics is enlarged at a frequency band including a frequency (800 MHz) of an antenna current.

According to the portable telephone set of the above embodiments, the antenna current flowing through the end of the substrate 3 flows through the metal terminal to the upper case by capacitive coupling. Thus, the cases 1 and 2 are electrically connected together at a frequency band including a frequency of the antenna current, and it is not necessary to form a flexible substrate in the hinge. Therefore, there is no need to shorten the substrate 3 in order to obtain desired antenna characteristics.

For example, even when a frequency of the antenna current is 1.5 GHz, or 1.8 GHz, effects similar to those in the case of 800 MHz can be obtained. The grounding of the embodiments is frame grounding, and the ground terminal is a frame ground terminal. The portable radio device of the present invention can also be applied to a radio device composed of two cases movably connected together, in addition to the portable telephone set.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

## Claims

1. A portable radio device comprising:
a first case (1) having at least one of a conductive member and a first substrate; and
a second case (2) for incorporating a second substrate (3) to mount a radio circuit (6) thereon, and an antenna element (10),
wherein the first case and the second case are movably connected to each other; and the second substrate is capacitively coupled to at least one of the conductive member and the first substrate and includes at lest one of conductive terminals (8, 9) which is arranged near at least one of the conductive member and the first substrate of the first case; the conductive terminal is connected to the ground of radio circuit; and antenna current generated by the antenna element is grounded to the first case.

2. A portable radio device according to claim 1, wherein a current flows from the second case through the conductive terminal to at least one of the conductive member and the first substrate of the first case during radio communication,

3. A portable radio device according to one of claims 1 and 2, wherein the second substrate is capacitively coupled to at least one of the conductive member and the first substrate when the portable radio device is unfolded.

4. A portable radio device according to one of claims 1 to 3, wherein the first case and the second case are foldably connected together,

5. A portable radio device according to one of claims 1 to 4, wherein the first case and the second case are rotatably connected together.

6. A portable radio device according to one of claims 1 to 5, wherein the first case and the second case are slidably connected together.

7. A portable radio device according to one of claims 1 to 6, wherein the second substrate includes a plurality of conductive terminals (8, 9).

8. A portable radio device according to claim 7, wherein at least one of the conductive terminals is arranged in a side end of the second substrate.

## Patentansprüche

1. Tragbares Funkgerät, umfassend:
ein erstes Gehäuse (1), welches ein leitendes Element und/oder ein erstes Substrat aufweist; und
ein zweites Gehäuse (2) zum Aufnehmen eines zweiten Substrats (3), um eine Funkschaltung (6) darauf zu montieren, und eines Antennenelements (10),
wobei das erste Gehäuse und das zweite Gehäuse beweglich miteinander verbunden sind; und wobei das zweite Substrat an das leitende Element und/oder das erste Substrat kapazitiv gekoppelt ist und wenigstens einen leitenden Anschluss (8, 9) enthält, welcher in der Nähe des leitenden Elements und/oder des ersten Substrats von dem ersten Gehäuse angeordnet ist; wobei der leitende Anschluss an die Erde der Funkschaltung angeschlossen ist; und wobei Antennenstrom, der durch das Antennenelement erzeugt ist, an dem ersten Gehäuse geerdet ist.

2. Tragbares Funkgerät nach Anspruch 1, wobei ein Strom von dem zweiten Gehäuse durch den leitenden Anschluss zu dem leitenden Element und/oder dem ersten Substrat von dem ersten Gehäuse während Funkkommunikation fließt.

3. Tragbares Funkgerät nach einem der Ansprüche 1 und 2, wobei das zweite Substrat an das leitende Element und/oder das erste Substrat kapazitiv gekoppelt ist, wenn das tragbare Funkgerät auseinander geklappt ist.

4. Tragbares Funkgerät nach einem der Ansprüche 1 bis 3, wobei das erste Gehäuse und das zweite Gehäuse klappbar miteinander verbunden sind.

5. Tragbares Funkgerät nach einem der Ansprüche 1 bis 4, wobei das erste Gehäuse und das zweite Gehäuse drehbar miteinander verbunden sind.

6. Tragbares Funkgerät nach einem der Ansprüche 1 bis 5, wobei das erste Gehäuse und das zweite Gehäuse verschiebbar miteinander verbunden sind.

7. Tragbares Funkgerät nach einem der Ansprüche 1 bis 6, wobei das zweite Substrat eine Mehrzahl von leitenden Anschlüssen (8, 9) enthält.

8. Tragbares Funkgerät nach Anspruch 7, wobei wenigstens einer von den leitenden Anschlüssen in einem Seitenende von dem zweiten Substrat angeordnet ist.

## Revendications

1. Dispositif radio portable comprenant :
un premier boîtier (1) comportant au moins un élément parmi un organe conducteur et un premier substrat ; et
un second boîtier (2) permettant d'incorporer un second substrat (3) pour monter sur ce dernier un circuit radio, et un élément d'antenne (10),
dans lequel le premier boîtier et le second boîtier sont raccordés de façon amovible l'un à l'autre ; et le second substrat est couplé capacitivement à au moins un de l'organe conducteur et du premier substrat et comporte au moins une des bornes conductrices (8, 9) qui est agencée près d'au moins un de l'organe conducteur et du premier substrat du premier boîtier ; la borne conductrice est raccordée à la masse du circuit radio ; et le courant d'antenne généré par l'élément d'antenne est mis à la masse du premier boîtier.

2. Dispositif radio portable selon la revendication 1, dans lequel un courant circule depuis le second boîtier à travers la borne conductrice vers au moins un de l'organe conducteur et du premier substrat du premier boîtier pendant une communication radio.

3. Dispositif radio portable selon l'une des revendications 1 et 2, dans lequel le second substrat est couplé capacitivement à au moins un de l'organe conducteur et du premier substrat lorsque le dispositif radio portable est déplié.

4. Dispositif radio portable selon l'une des revendications 1 à 3, dans lequel le premier boîtier et le second boîtier sont raccordés l'un à l'autre de façon pliable.

5. Dispositif radio portable selon l'une des revendications 1 à 4, dans lequel le premier boîtier et le second boîtier sont raccordés l'un à l'autre avec faculté de rotation.

6. Dispositif radio portable selon l'une des revendications 1 à 5, dans lequel le premier boîtier et le second boîtier sont raccordés l'un à l'autre avec faculté de coulissement.

7. Dispositif radio portable selon l'une des revendications 1 à 6, dans lequel le second substrat comporte une pluralité de bornes conductrices (8, 9).

8. Dispositif radio portable selon la revendication 7, dans lequel au moins une des bornes conductrices est agencée dans une extrémité latérale du second substrat.
